# EUROPEAN PATENT APPLICATION

(11) **EP 4 721 558 A1**
(43) Date of publication of application: **08.04.2026**
(21) Application number: 25182878.6
(22) Date of filing: 16.06.2025
(51) Int. Cl.: A01K 97/02, A01K 97/04, A01K 61/80

(54) **DEVICE FOR ADMINISTERING FOOD FOR ATTRACTING FISH, ETC**

(30) Priority: 17.06.2024 NL 1044899
(71) Applicant: GERRITSEN, Herman, Eric, 7423 DW Deventer (NL)
(72) Inventor: GERRITSEN, Herman, Eric, 7423 DW Deventer (NL)

(57) **Abstract**

Equipment (1) for administering bait in fishing water, comprising a bait compartment (4) for bait (4a), which is in communicating connection with the fishing water (3), so that the bait and the water in the bait compartment form a wet bait mass, which gradually enters the fishing water via an outlet opening (7). The device also comprises a live bait compartment (8) for the maggots (8a) living therein, which is in communication with the fishing water via an outlet opening (8c) and a dry trap and/or creep path (9a,9a').

## Description

The invention relates to a device intended and equipped for administering food for the purpose of attracting fish etc. in water, in particular for use in sport or professional fishing. Hereinafter, the device will also be referred to as a "feeder".

The present invention aims to provide a device for the purpose of fishing, whereby much more fish can be caught in a short time. An additional advantage is that net fishing and fishing with long lines with hundreds of hooks can become redundant and by-catch can be returned alive.

The device according to the invention has been developed to attract fish to a certain place and to ensure that the fish are not offered too much food at once, so that they are no longer hungry and do not bite. It is important to use all natural reactions of fish and to stimulate them in order to get better catches. Fish are opportunists and must use all opportunities in the water to get food. They use various senses such as smell and scent and sight, but the most important sense for fish is the lateral line. This is an organ that picks up vibrations and movements. This sense is very sensitive and can pick up vibrations through sound and movement from very great distances. It is important to know that sound travels three times faster under water than in air. The lateral line enables fish to hunt for food in very difficult circumstances in murky water or at night and to discover dangers, for example. In addition, the lateral line enables fish to swim in schools and to move like a large organism. Maggots, for example, are a very popular bait for many fish species and are used by many anglers. The device according to the invention aims to ensure that fish are attracted with both water-mixed (dry) bait and live bait.

In order to achieve the intended purpose, the invention provides a device which is intended and equipped for administering fish food for the purpose of attracting fish etc. in fishing waters, in particular for use in sport or professional fishing,
the device comprising one or more floating compartments designed to float the device,
as well as a bait compartment, designed to contain a quantity of bait, which bait compartment is in communicating connection with the fishing water surrounding the device, all designed in such a way that the bait and the water in the bait compartment together form a moist or wet bait mass, whereby the bait compartment is provided with an outlet opening which is designed and shaped in such a way that the bait mass gradually ends up in the fishing water and sinks downwards of its own accord,
the device further comprising a live bait compartment designed to accommodate, for example, a quantity of live maggots, which compartment is provided with an outlet opening which is connected to the fishing water via a dry fall and/or crawl path, all this being designed in such a way that the live bait compartment remains dry, i.e. is not moistened or filled by ambient water, which would cause the live bait (maggots, etc.) to drown prematurely.

The invention will now be discussed in more detail with the aid of the figure description below.
- Figures 1 and 2: show a first exemplary embodiment of a device according to the invention;
- Figure 3: shows a second exemplary embodiment of a device according to the invention.

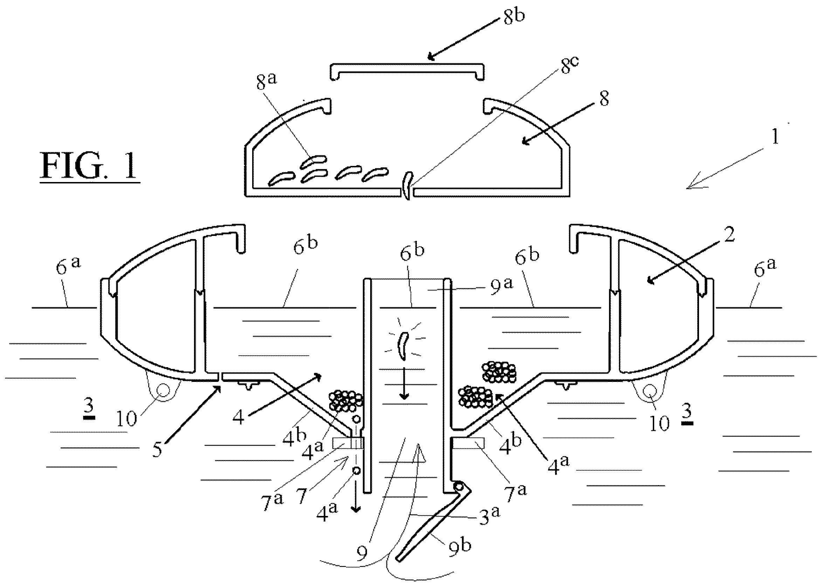

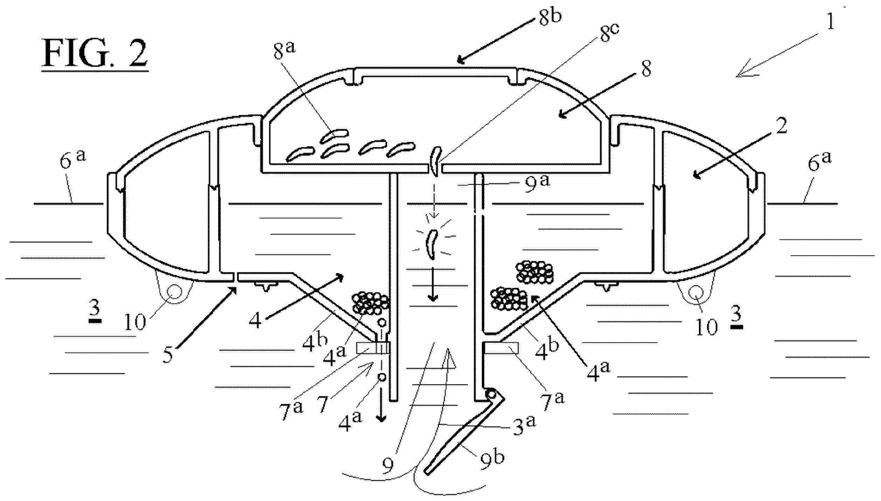

Figures 1 and 2 both show an exemplary embodiment of a device 1 according to the invention, which is intended and designed for administering fish food for the purpose of attracting fish etc. in fishing waters, in particular for use in sport fishing, but also very useful for professional fishing ("bread fishing").

The device 1 comprises one or more floating compartments or dry fall and/or creep paths 2, designed to allow the device to float on the fishing water 3. Furthermore, the device 1 comprises a bait compartment 4, designed to receive a quantity of bait 4a therein, which bait compartment 4 is in communicating connection with the fishing water 3 surrounding the device via an opening 5, such that during use of the device the water level 6a inside the bait compartment 4 is substantially equal to the water level 6b outside the device. This is designed in such a way that the bait 4a and the water in the bait compartment 4 together form a moist or wet bait mass. The bait compartment 4 is further provided with an outlet opening 7 which is designed and shaped in such a way, such as by a funnel-shaped bottom 4b, that the bait mass 4a of its own accord gradually ends up in the fishing water 3 and sinks downwards. The openings in the compartment can be enlarged and reduced by a slider 7a.

The device 1 also comprises a live bait compartment 8, designed to accommodate a quantity of live bait 8a, which compartment 8, in addition to a lid 8b, is further provided with an outlet opening 8c which, via a dry trap and/or creep path 9a, is in communication with the fishing water 3 via a water chamber 9 which is in communicating communication with the fishing water 3 surrounding the device 1. The water chamber 9 is provided (at the end or somewhere inside the water chamber 9) with a "non-return valve" 9b which is designed to close off the dry trap and/or creep path 9a and the water chamber 9 in the event of an undesirable inflow velocity and/or pressure of water 3a flowing in from the fishing water 3 upwards, in the direction of the outlet opening 8c of the bait compartment 8, thereby preventing the maggots 8a from getting wet when the device 1 is placed in the water 3 (whereby the water chamber 9 would otherwise fill so quickly that the water 3a could enter the live bait compartment 8 via the outlet opening 8c).

The live bait compartment 8 serves as a cover for the bait compartment 4, as shown in Figure 2. Lighting can be fitted at the bottom of the bait compartment 4

The operation is as follows. The upper part of the device, the live bait compartment 8, is filled with bait and this live bait can be let out one by one through a hole 8c, where it falls into the water. The bait must remain dry and may not get wet. One of the reasons for the maggots to escape is that they are thirsty and they smell the water and go looking for it. The other reason is that they are looking for a dark place to pupate; that is why the upper part is transparent. Another reason is that if the bait is in a reasonably well-sealed housing, a lot of ammonia (and CO ₂₎ is released and that is also a reason for the maggots to want to escape.

In the middle section of the device, the bait compartment 4, there is the possibility to put different types of bait. This bait swirls down in small quantities through (adjustable) holes 7 in the bottom 4b of the device and is therefore not dumped in the water as a large ball that suddenly sinks to the bottom. By feeding small quantities very slowly and specifically in this way, the fish remain hungry and a kind of "feeding frenzy" occurs. The fish also get used to the food that is unknown to them very quickly, because a lot of live bait that we use while fishing does occur in nature but rarely in water. Because of the frenzy, they no longer nibble on the bait but they dive straight on top of it. This results in a lot of fish caught on the hook.

These are often smaller fish at first, but they also attract larger species through their activities and predatory fish also go out to investigate. It takes at least an hour before the equipment is empty and needs to be refilled.

The whole effect can be enhanced by electronics. Fish will go out to investigate if there is a splash or a buzzer in the water. This can be done easily with a small MP3 player (or Chip). A Pavlov reaction can be triggered, every splash or sound near the device is then associated with food. Light can also be used to attract fish to the device in the dark.

In another embodiment this "triggering" can also be done on a timer. This timer can then also be used to release bait with a feeding mechanism so that it becomes interesting for fishermen (especially commercially) to fish with a feeder according to the invention.

In a very elaborate version the whole device can be provided with a propulsion like propellers or sail. This can then be computer controlled (GPS) or via a remote control to a certain location.

In this way, a lot of net fishing and fishing with long lines with hundreds of hooks could become redundant. This benefits our nature and prevents (lost) nets and lines that cause victims everywhere, and above all ensures that by-catch can be returned alive.

To follow the reactions of fish to the equipment, the equipment can be equipped with a "fish finder" (wireless or wired) or wireless (video) camera. This shows in particular whether the groups of small fish are approached by larger fish or predatory fish.

The buoyancy chamber can optionally be filled (temporarily) with water so that it can be kept below the water surface using an anchor (see anchor attachments 10) to hide the device from third parties.

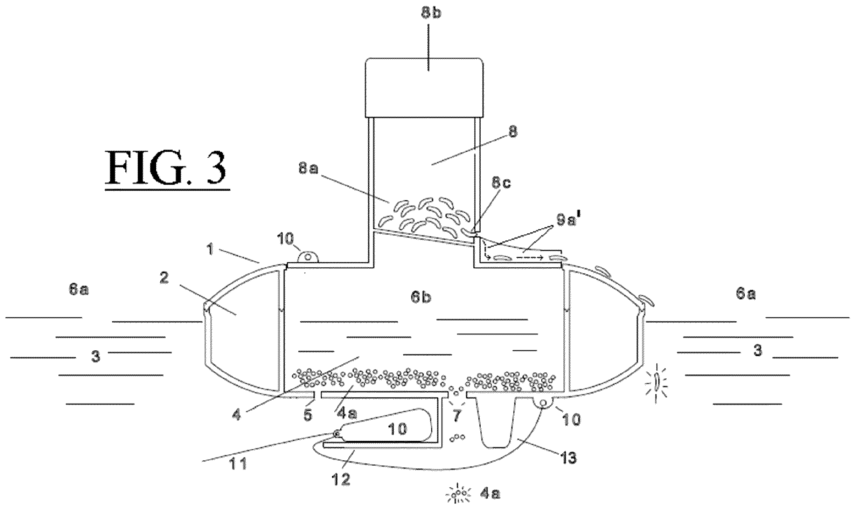

In the embodiment of Figures 1 and 2, the dry fall and/or creep path 9a is designed as a (remaining dry) air chamber ("fall path") 9a. In another embodiment, shown in Figure 3, the dry fall and/or creep path is not designed as an (internal) air chamber 9a, but as a (remaining dry) fall/creep path 9a' on or along the outer surface of the device.

This prevents certain types of maggots that have a kind of built-in life jacket from inflating, which means that the maggots (when they crawl out through the middle of the float) continue to float in the tube through which they normally fall. This can clog the tube in the middle, so that no more maggots fall through. In the embodiment in figure 3, the shape of the device has been modified somewhat, so that the maggots crawl out through a hole 8c in the side. Connecting to this hole 8c is a (dry) trap/crawl path 9a' (an "escape path") on or along the outer surface of the device 9a', provided with side walls, intended to prevent the maggots from crawling around over the entire dry part of the outer surface of the float, but to guide them in the direction of the water. Furthermore, the bottom of the compartment 8 slopes diagonally towards the hole 8c, through which the maggots are guided in the direction of the escape opening 8c.

In the embodiment of figure 3, a container 12 is also fitted under the float, in which a lead anchor fits. This allows the anchor and the device (the "Feeder") to be thrown out in one go. The anchor then falls out of the container 12, which makes it easier to put the whole thing in the water. The anchor line 11 from the Feeder to the side is there to get the Feeder out of the water. Two feet 13 are fitted on the bottom to be able to put the device down stably.

Thus, the present invention provides a device for fishing which allows large numbers of fish to be caught in a short time, while eliminating the need for net fishing and long-line fishing with hundreds of hooks, and allowing by-catch to be released alive.

With regard to prior art publications mentioned in the Novelty Report of an earlier, not-published predecessor (NL1043847, filed on 19-11-2020) of the present patent application, it is noted that none of those publications mention a live bait compartment that remains dry for the live bait, such as live maggots, which is in "dry connection" (namely via the aforementioned "dry fall and/or creep path") with the fishing water, as a result of which the live bait compartment remains dry. The remark in the Novelty Report "the skilled person will read the use of live bait when he reads bait" is therefore incorrect, because in the configuration according to the invention the dry bait is subjected to wetting by the ambient (fish) water, while the live (bait) bait, the live maggots, are enclosed in a compartment that remains dry, with a dry "escape" opening (8c) and escape route (9a) provided for the live maggots, via which they ultimately end up in the fishing water and thus serve to attract fish.

## Claims

1. Device (1) intended and equipped for administering fish food for the purpose of attracting fish etc. in fishing water, which device comprises one or more floating compartments (2), equipped for allowing the device to float, as well as a bait compartment (4), equipped for receiving a quantity of bait (4a), which bait compartment is in communicating connection with the fishing water (3) surrounding the device, so that the bait and the water in the bait compartment together form a moist or wet bait mass, the bait compartment being provided with an outlet opening (7) which is equipped and shaped in such a way that the bait mass gradually ends up in the fishing water of its own accord,
the device further comprising a live bait compartment (8) designed to accommodate live bait (8a), which compartment is provided with an outlet opening (8c) which is connected to the fishing water via a dry trap and/or crawl path (9a,9a').

2. Device according to claim 1, wherein the outlet opening (8c) of the live bait compartment is connected to the fishing water via a dry trap and/or creep path (9a) via a water chamber (9) which is in communicating connection with the fishing water.

3. Device according to claim 1, wherein the outlet opening (8c) of the live bait compartment is connected to the fishing water via a dry trap and/or creep path (9a') on or along the outer surface of the device.

4. Device according to claim 2, comprising a non-return valve (9b) designed to close the dry fall and/or creep path and/or the water chamber in the event of an undesirable inflow velocity and/or pressure of water (3a) flowing in from the fishing water in the direction of the outlet opening of the live bait compartment.
